# EUROPEAN PATENT APPLICATION

(11) **EP 4 538 217 A1**
(43) Date of publication of application: **16.04.2025**
(21) Application number: 24201262.3
(22) Date of filing: 19.09.2024
(51) Int. Cl.: B66F 9/075

(54) **ELECTRIC TELEHANDLER**

(30) Priority: 04.10.2023 IT 202300020526
(71) Applicant: Dieci S.r.l., 42027 Montecchio Emilia (RE) (IT)
(72) Inventor: COMASTRI, Davide, 42046 CANOSSA (RE) (IT); OGNIBENE, Enrico, 42030 VEZZANO SUL CROSTOLO (RE) (IT)
(74) Representative: Corradini, Corrado

(57) **Abstract**

A telehandler (10) comprising:
- a supporting frame (11) provided with a front section and a rear section aligned along a longitudinal axis of the supporting frame (11);
- a lifting arm (13) articulated to the rear section of the supporting frame (11) with the ability to rotate around at least one swinging axis;
- a front axle (21) provided with two front wheels (12) and connected to the front section of the supporting frame (11);
- a rear axle (22) provided with two rear wheels (12) and connected to the rear section of the supporting frame (11);
- a drive shaft (200) kinematically connecting the front axle (21) and the rear axle (22) for the transmission of motion between the front wheels (12) and the rear wheels (12);
- at least one electric motor (31) to drive in rotation the front wheels (12) and/or the rear wheels (12),
- at least one electric battery (40) for electrically supplying the at least one electric motor (31), wherein the at least one electric battery (40) is supported by a central section of the supporting frame (11) axially interposed between the front section and the rear section;
wherein each electric battery (40) is arranged so as to be intersected by a vertical longitudinal plane (M) of the supporting frame (11) parallel to its longitudinal axis and equally distant from the wheels (12).

## Description

### TECHNICAL FIELD

The present invention relates to a telescopic handler (so called *telehandler*), preferably an electric telehandler (*full electric or Hybrid*).

### PRIOR ART

As known, electric (four-wheel drive) telehandlers, i.e. wherein the drive wheels are driven in motion by an electric motor (battery-powered) and wherein the lifting arm is driven by a hydraulic pump that is in turn driven by an electric motor, are becoming commercially popular.

There is quite a fair range of electric telehandlers on the market.

A need felt in the industry is to achieve a good weight balance of the telehandler in every working configuration thereof, reducing the burden on the user, even when batteries need to be removed or changed and/or their number increased or reduced.

In fact, the front-rear and, even more so, the lateral balancing of the telehandler is a critical point, as there are regulations to be complied with that verify the stability (e.g. lateral or in a raised arm condition) of the vehicle on an inclined plane.

An object of the present invention is to meet the aforesaid (and other) needs of the prior art, within the framework of a simple, rational and cost-effective solution.

These objects are achieved by the features of the invention set forth in the independent claim. The dependent claims outline preferred and/or particularly advantageous aspects of the invention.

### DISCLOSURE OF THE INVENTION

The invention, in particular, makes available a telehandler (preferably an electric telehandler) comprising:
- a supporting frame provided with a front section and a rear section aligned along a longitudinal axis of the supporting frame;
- a lifting arm articulated to the rear section of the supporting frame with the ability to rotate around at least one swinging axis;
- a front axle provided with two front wheels and connected to the front section of the supporting frame;
- a rear axle provided with two rear wheels and connected to the rear section of the supporting frame;
- a drive shaft kinematically connecting the front axle and rear axle for the transmission of motion between the front wheels and the rear wheels;
- at least one electric motor to drive in rotation the front wheels and/or rear wheels,
- at least one electric battery for electrically supplying the at least one electric motor, wherein the at least one electric battery is supported (directly) by a central section of the supporting frame axially interposed between the front section and the rear section;
   wherein each electric battery is arranged so as to be intersected by a vertical longitudinal plane of the supporting frame parallel to its longitudinal axis and equally distant from the wheels (i.e. the front wheel pair and the rear wheel pair).

Thanks to such a solution, it is possible to meet the industry requirements set forth above.

Furthermore, thanks to this solution, each electric battery is positioned in a practically central position relative to the telehandler. This position ensures better weight balance, concentrating the masses centrally on the telehandler.

Furthermore, this positioning ensures, even if the size of the electric battery is changed, a limited impact on the lateral balancing of the telehandler.

Again, this positioning ensures, as in the case of the lateral balancing, a minimal impact on the front-rear weight balance even changing the size of the batteries. The centre of gravity of the battery pack always remains within the wheelbase of the telehandler, and the battery may be positioned to maintain the optimum weight balance. Advantageously, each electric battery has a lower base that may be arranged above the drive shaft.

In addition, the telehandler may comprise a lifting actuator for raising and lowering the lifting arm, between a lowered position, wherein the lifting arm has its longitudinal axis substantially horizontal, and a raised position, wherein the lifting arm has its longitudinal axis inclined with respect to the horizontal one, wherein each electric battery has a top wall which may be arranged below the lifting actuator when the lifting arm is in the lowered position.

This particular position makes it possible to maintain an excellent clearance from the ground of the telehandler without having to change the maximum height of the telehandler, keeping the batteries protected and without compromising accessibility for maintenance. This position also makes it possible to maintain a classic layout for telehandlers, where the machine is provided with 2 axles connected by a transmission shaft (cardan shaft); with this particular positioning of the batteries, complicated layouts may be avoided, simplifying the production and maintenance of the telehandler (and thus reducing the associated costs).

Advantageously, the lifting actuator may be hinged to the supporting frame with respect to a hinge axis parallel to the swinging axis of the lifting arm, wherein each electric battery has a top wall arranged below the horizontal plane passing through the hinge axis. Again, each electric battery may be placed side by side and misaligned in plan to a driver's cab supported by the supporting frame.

Thanks to this, the driver's cab and its inner space are not affected by the dimensions of the batteries, which is a clear advantage for the user's driving comfort and safety.

Advantageously, each battery (or the set of batteries) may have an elongated shape and a prevailing longitudinal axis, wherein each battery is positioned relative to the supporting frame in such a way that its vertical median plane, that is normal to its prevailing longitudinal axis, is substantially parallel to the vertical longitudinal plane of the supporting frame.

Further, the telehandler may comprise a housing provided with an opening closed by an openable hatch made at a crankcase fixed to the supporting frame, wherein the opening is configured to make the housing accessible from outside the crankcase, wherein the housing is configured to house the at least one electric battery and comprises a removable connector to which the at least one electric battery is removably connectable, said at least one electric battery being configured to be arranged in and/or extracted from the housing through the opening.

Advantageously, then, each electric battery may be configured to be arranged in and/or extracted from the housing through the opening by at least one translation along a sliding direction orthogonal to the vertical longitudinal plane of the supporting frame.

In addition, the housing may be made in the central section of the supporting frame interposed between the front section and rear section, preferably between the front wheels and rear wheels.

Advantageously, for the same purposes as set forth above, the housing may have a lower (beam-shaped) floor arranged above the (cardan) drive shaft, preferably above the horizontal plane containing the central axes of the front axle and rear axle interconnected by the drive shaft.

Advantageously, the lower floor of the housing may be defined as integral with a portion of the central section of the supporting frame.

Again, the hatch may be arranged at one side of the crankcase, between a front wheel and a rear wheel.

Again, a rear wall of the housing, opposite to the hatch, may define an axial end-stop abutment for each battery inside the housing, wherein preferably the outer face of the rear wall of the housing delimits an inner side of a telehandler driver's cab.

Thanks to this, the electric battery may be stably connected inside the housing.

Advantageously, the telehandler may comprise a plurality of modular electric batteries, preferably equal and joined or separated from each other, with their own prevailing longitudinal axes parallel to each other, the electric batteries being placed side-by-side with respect to a side-by-side direction parallel to the longitudinal axis of the supporting frame.

Furthermore, the plurality of multiple electric batteries may be arranged within the same housing.

Advantageously, each electric battery may be centred on the supporting frame, so that the centre of gravity of the masses that make up the battery essentially belongs to a vertical longitudinal plane of the supporting frame containing the centre of gravity of the masses that globally make up the telehandler (without the electric batteries).

### BRIEF DESCRIPTION OF THE DRAWINGS

Further features and advantages of the invention will be more apparent after reading the following description provided by way of non-limiting example, with the aid of the accompanying drawings.

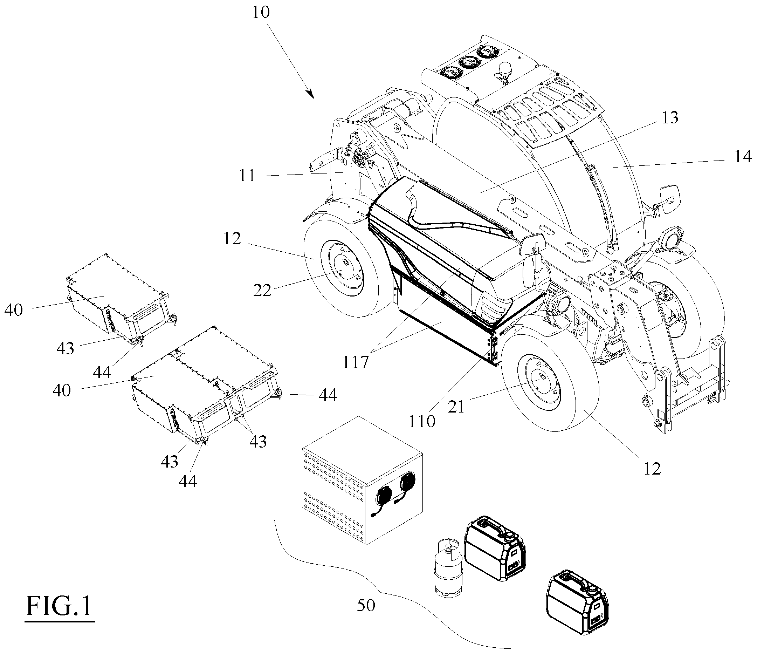

Figure 1 is an axonometric view of a telehandler according to the invention.
Figure 2 is an axonometric view of the supporting frame and dampening unit of the telehandler of Figure 1, with an electric battery (fully) inserted into the dedicated housing.
Figure 3 is a plan view from above of Figure 2.
Figure 4 is a (schematic) section view along the line IV-IV of Figure 3.
Figure 5 is an axonometric view from another angle of Figure 2.
Figure 6 is an axonometric view of Figure 5 with the electric battery being extracted from the housing.
Figure 7 is a cross-section view of Figure 5.
Figure 8 is a cross-section view of Figure 6.

### BEST MODE TO IMPLEMENT THE INVENTION

With particular reference to these figures, a telehandler (or lifting vehicle) has been globally referred to as 10.

The telehandler 10 is provided with a supporting frame 11 moving on wheels 12, of which one pair of front wheels 12 and one pair of rear wheels 12, and supporting at the top a lifting arm 13 and, for example, a driver's cab 14, e.g. placed alongside the lifting arm 13.

The supporting frame 11 is substantially rigid (i.e. non-deformable under the usual work-loads to which it is subjected in use).

It is not excluded, however, that in certain applications the supporting frame 11 may be articulated, i.e. have several (singularly rigid) portions articulated to each other, e.g. jointed relative to a pivot axis (substantially vertical).

The supporting frame 11 has (overall) an elongated shape along a longitudinal axis (defining the longitudinal axis of the telehandler 10) and therefore has, at or near a first axial end thereof, a front section and at or near an opposite second axial end thereof, a rear section.

A central section is (axially) interposed between the rear and front sections.

In the present description, front refers to the portion of the telehandler 10 or of the supporting frame 11 which precedes (i.e. it is placed at the front) in a feed direction of the telehandler 10 on the ground in a usual and preferred forward run (i.e. wherein the free end of the lifting arm 13 is placed) and rear refers to the portion of the telehandler 10 or of the supporting frame 11 which follows (i.e. it is placed at the back) in a feed direction of the telehandler 10 on the ground in the usual and preferred forward run (or that precedes in a backward run).

Furthermore, in the present discussion, vertical refers to either the absolute vertical or any direction orthogonal to the plane on which the front and the rear wheels 12 of the telehandler 10 rest. Furthermore, "horizontal" refers herein to either the absolute horizontal or any plane parallel to the plane on which the front and the rear wheels 12 of the telehandler 10 rest.

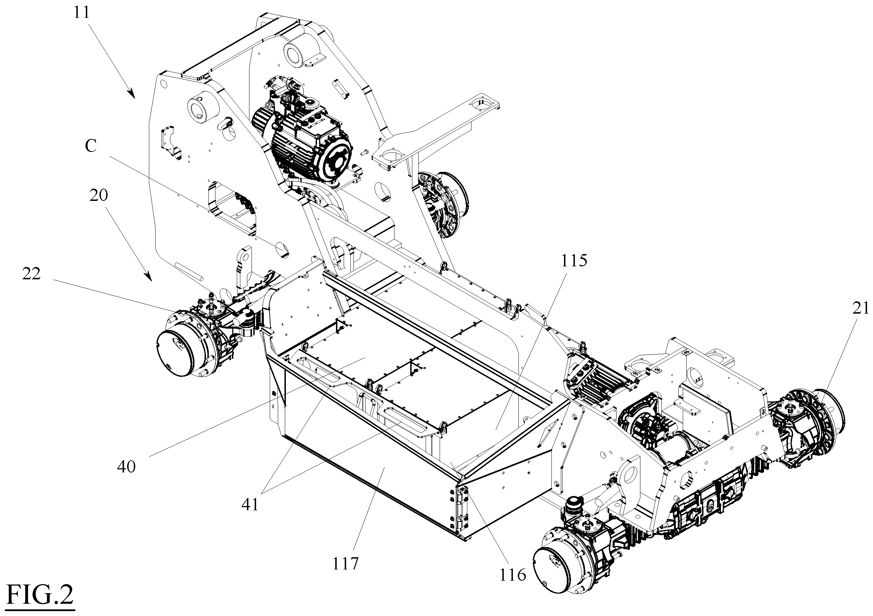

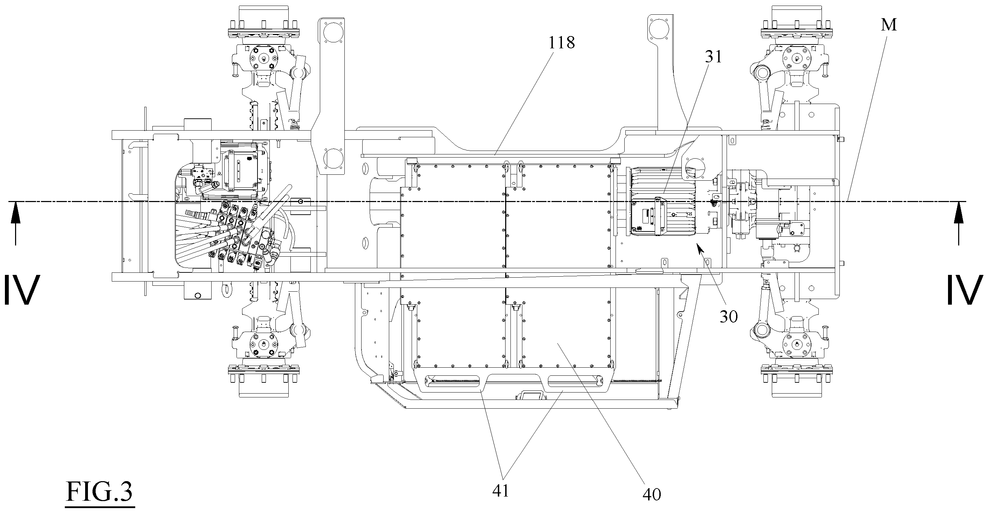

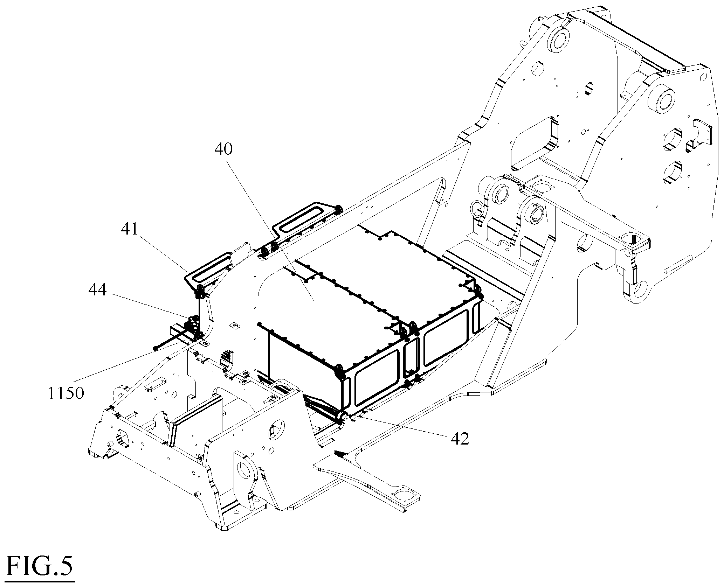

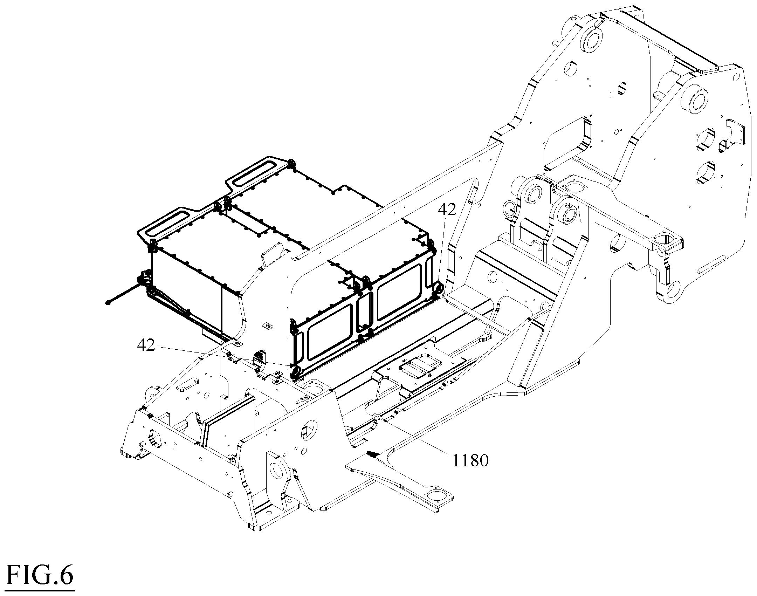

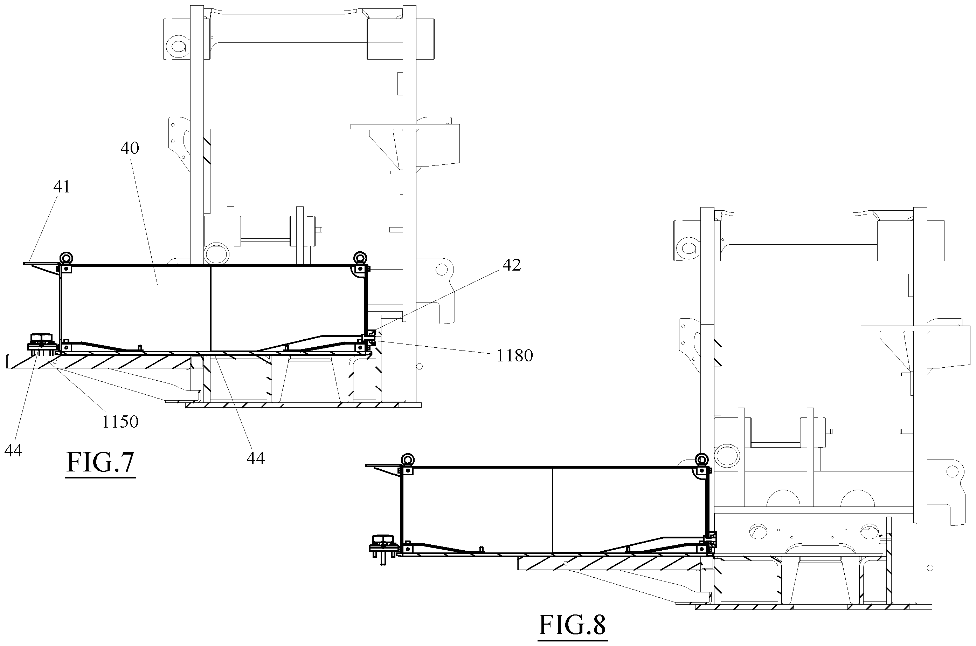

The supporting frame 11 comprises (or is formed by) two spars, as shown in figures 2-8. The spars are generally planar metal (rigid) parts.

The spars are parallel to each other and develop longitudinally in a direction parallel to the longitudinal axis of the supporting frame 11 (and, generally, perpendicular to a transversal direction - or a direction of width - of the telehandler 10).

The spars are joined together by crosspieces or transversal bars, thus defining a trellis supporting frame 11.

The spars have, at their bottom, beams or crosspieces that collectively form a (discontinuous) floor. One of the two spars, preferably the one distal from the driver's cab 14, has a through opening, which may be polygonal in shape (preferably quadrangular, more preferably rectangular), and having a prevalent longitudinal development parallel to the longitudinal axis of the supporting frame 11.

A crankcase 110 or (protective) fairing, which defines therein a (hollow) volume for housing various operating members of the telehandler 10 which will be described hereinafter is attached to the supporting frame 11.

The lifting arm 13 is preferably hinged - at its rear end - to the supporting frame 11, e.g. above it, preferably at the rear section thereof.

For example, the lifting arm 13 has an elongated shape along a longitudinal axis that is parallel to the longitudinal axis of the supporting frame 11 (i.e. which lies on a vertical plane parallel to the longitudinal axis of the supporting frame itself) and therefore has a rear axial end thereof hinged to the rear section of the supporting frame 11 and an opposite free (distal) front axial end, which protrudes for example beyond the front end of the supporting frame 11.

The lifting arm 13 is preferably of the telescopic type.

In particular, the lifting arm 13 has a plurality of sections that can be driven between a contracted position and an extended position by means of a first (double-acting) hydraulic actuator.

The lifting arm 13 is hinged to the supporting frame 11 so that it can swing around a (single) swinging axis.

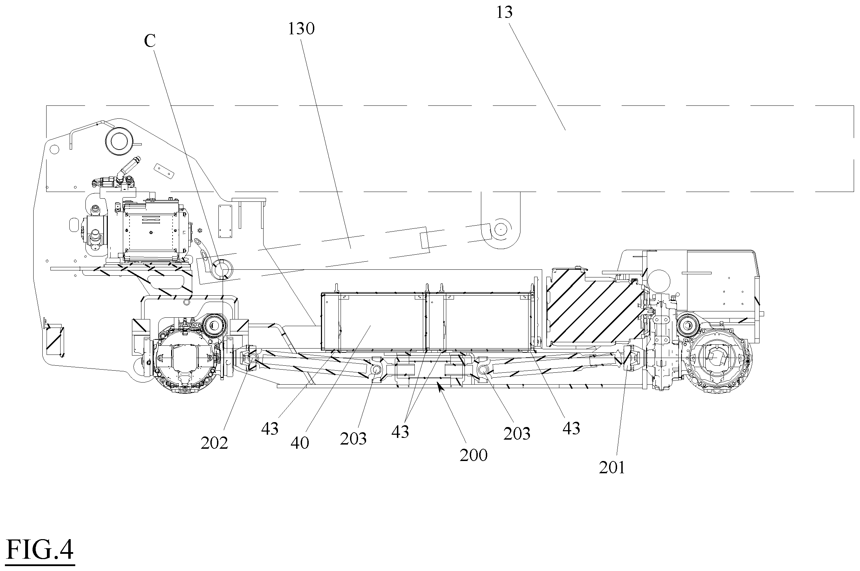

The swinging of the lifting arm 13 is controlled and operated by a hydraulic (double-acting) lifting actuator 130, shown only schematically in Figure 4.

For example, the (only) swinging axis is substantially horizontal.

In some embodiments, the swinging axis is fixed relative to the supporting frame 11 (and orthogonal to the longitudinal axis thereof), in other applications the swinging axis (and with it the lifting arm 13) is rotatable around a further substantially vertical axis of revolution (in such a case, the telehandler 10 is of the rotary type, i.e. it has a fifth wheel - motor-driven - on which the lifting arm 13 is mounted, and for example the driver's cab and/or the crankcase or part thereof, with a substantially vertical rotation axis, i.e. orthogonal to the longitudinal axis of the telehandler and to the swinging axis of the lifting arm 13).

The lifting arm 13 has, at its front free axial end, a connecting member, such as a tool-holder plate, adapted to connect (in a releasable manner) to one or more working tools, such as buckets, forks, cabs or others.

The (linear) lifting actuator 130 has a cylinder within which a rod slides between a retracted and an extracted position.

The lifting actuator 130 is configured to raise and lower the lifting arm 13, between a lowered position thereof, wherein the lifting arm 13 has its longitudinal axis substantially horizontal (and parallel to the longitudinal axis of the supporting frame 11), and a raised position, wherein the lifting arm 13 has its longitudinal axis inclined with respect to the horizontal one.

When the lifting actuator 130 is in the retracted position (end-stop position, where the lifting actuator is arranged with its central axis substantially horizontal/slightly inclined upwards), the lifting arm 13 is in its lowered position (see Figure 4), and when the lifting actuator 130 is in (any) extracted position the lifting arm 13 is in its (any) raised position. The lifting actuator 130, e.g. its cylinder, is hinged to the supporting frame 11 with respect to a (single) hinge axis C parallel to the swinging axis of the lifting arm 13, e.g. arranged on a (horizontal) plane at a lower elevation than the elevation on which the (horizontal) plane on which the swinging axis is arranged lies.

For example, the hinge axis C is arranged at the front (proximal to the central section of the supporting frame 11) with respect to the swinging axis along the longitudinal axis of the supporting frame 11.

The supporting frame 11 is supported on the ground by the wheels 12, such as by the interposition of a dampening unit (rigid, or jointed, e.g. free or actuated and/or dampened).

It is not excluded, however, that the supporting frame 11 is supported on the ground directly by the wheels 12 (without interposition of dampening units and/or axles).

The dampening unit 20 comprises a front (rigid) axle 21 supporting, at its opposite free ends (provided with respective hubs), the pair of front wheels 12.

The front axle 21 is supported by and/or attached to the front section of the supporting frame 11.

For example, the front axle 21 can be rigidly attached to the supporting frame 11 (below it) or be fixed in a swinging manner (i.e. be hinged to the supporting frame 21 around a swinging axis parallel to the longitudinal axis of the supporting and central frame 21, in which case, preferably, there is at least one actuator configured to command/control the swinging and thus the tilting of the front axle 21 or the transverse levelling of the supporting frame 11).

Again, the dampening unit 20 comprises a rear (rigid) axle 22 supporting, at the opposite free ends (provided with respective hubs), the pair of rear wheels 12.

The rear axle 22 is for instance independent of the front axle 21.

The rear axle 22 is supported by and/or attached to the rear section of the supporting frame 11.

At least one of the pair of front wheels 12 and the pair of rear wheels 12 or both can be steering and/or drive wheels.

The front axle 21 and the rear axle 22 are preferably (but not exclusively) connected to each other (kinematically) by a drive shaft 200, for example a cardan shaft (i.e. provided at the opposite ends with respective cardan joints), which extends longitudinally substantially parallel to the longitudinal axis of the telehandler 10 (below the supporting frame 11).

The front axle 21 allows and supports the rotation of the front wheels 12 and the rear axle 22 allows and supports the rotation of the rear wheels 12 to move the telehandler 10 relative to the ground.

The drive shaft 200 is configured to transmit/synchronise the rotational motion between the front wheels 12 (of the front axle 21) and the rear wheels 12 (of the rear axle 22).

For example, the drive shaft 200 has a front cardan joint 201 connected, at a central axis (horizontal and parallel to the longitudinal axis of the supporting frame 11) of the front axle 21, and a rear cardan joint 202 connected, at a central axis (horizontal and parallel to the longitudinal axis of the supporting frame 11 and, for example, coaxial to the central axis of the front axle 21) of the rear axle 22.

In the example shown, the drive shaft has three sections, of which a front section is connected, via the front cardan joint 201, to the front axle 21, a rear section is connected, via the rear cardan joint 202, to the rear axle 22, and a central section, interposed between the front section and the rear section, which is connected to the front section and the rear section via respective intermediate cardan joints 203.

For example, the central section is arranged lower than the horizontal plane on which the central axes of the front axle 21 and rear axle 22 lie.

The telehandler 10 further comprises a housing 115 enclosed within the crankcase 110. The housing 115 is defined by a portion of the empty volume enclosed by the crankcase 110 (and the supporting frame 11).

The crankcase 110 is provided with an opening 116 which makes the housing 115 accessible from outside the crankcase 110, which is (normally) closed by at least one openable hatch 117 made at the crankcase 110.

For example, the opening 116 is closed by a plurality of hatches 117 (e.g. two in number).

Each hatch 117 is movable to open and close the opening 116, e.g. hinged with respect to at least one hinge axis (e.g. vertical or horizontal).

In the example shown, the opening 116 is closed by a first (lower) hatch 117 hinged to the crankcase 110 relative to a vertical hinge axis and a second hatch 117 (top or bonnet) hinged to the crankcase 110 relative to a horizontal hinge axis.

It is not excluded, however, that the opening 116 may be closed by a single hatch or by a different number of hatches, or that the housing 115 is divided into several compartments (separated from each other by partitions) each of which is made accessible from outside the crankcase 11 by a respective opening 116 closed, in an openable manner, by one or more hatches 117.

Furthermore, it is not excluded that the hatch 117 may be of the slide type, i.e. sliding with respect to a sliding direction (e.g. horizontal and orthogonal to the longitudinal axis of the telehandler or parallel to that longitudinal axis).

The housing 115 preferably comprises at least one air and/or ventilation intake, for example made at the hatch 117 (and preferably defined by a ventilation grid).

In the example shown, the housing 115 is arranged substantially at the central section (of the supporting frame 11) of the telehandler 10, i.e. it is arranged between the front wheels 12 and the rear wheels 12, preferably it is axially interposed between the front axle 21 and the rear axle 22.

Preferably, the housing 115 is arranged above the drive shaft 200, for example at a higher elevation relative thereto and/or at least partially overlapping vertically relative thereto.

The housing 115 has a lower (support) floor arranged above (i.e. at a higher elevation with respect thereto and/or at least partially overlapping vertically relative thereto) the drive shaft 200.

Preferably, the lower floor of the housing 115 is arranged above the horizontal plane containing the central axes of the front axle and rear axle interconnected by the drive shaft 200.

Again, the lower floor of the housing 115 is defined integral with a portion of the central section (of the floor) of the supporting frame 11, i.e. a portion of the central section defines (directly) the lower floor of the housing 115.

The lower floor, i.e. the central section of the supporting frame 11, is substantially beam-shaped (with lightening voids and not covered by an infill wall).

The housing 115 further comprises a (vertical) rear wall 118, opposite (and essentially homologous, albeit fixed) the hatch 117 (in particular, the first hatch 117).

The rear wall 118 (of the housing 115) is substantially defined by a spar of the supporting frame 11 (or by a bar fixed thereto), preferably the spar proximal to the driver's cab 14 (which is closed and does not have the said through opening).

Preferably, the outer face of the rear wall 118 of the housing 115 delimits a portion of an inner side (facing towards the lifting arm 13) of the driver's cab 14 of the telehandler 10. In practice, the driver's cab 14 is totally or predominantly arranged at the side (not vertically overlapping) of the housing 115 (and adjoining/placed side by side relative to a horizontal side-by-side direction and orthogonal to the longitudinal axis of the supporting frame 11.

The housing 115 is defined, in practice, by a (hollow) volume, e.g. substantially parallelepiped, contained within the crankcase 110 and delimited at the bottom by the lower floor, laterally (with respect to the longitudinal axis of the supporting frame 11) by the rear wall 118 and the hatch 117.

In addition, the housing 115 can be delimited in the front-rear direction by two containment banks.

The housing 115 (and/or its lower floor) is, preferably, (ideally) intersected by a vertical longitudinal plane M of the supporting frame 11 parallel to the longitudinal axis thereof and equally distant from the wheels 12 (i.e., equally distant from the steering axis thereof where provided), in other words, a longitudinal plane on which the central axes of the front axle 21 and the rear axle 22 lie.

For example, the rear wall 118 of the housing 115 is closer (and parallel) to said vertical longitudinal plane M than the opening 116 (closed by the hatch 117).

Moreover, the housing 115 is ideally intersected (substantially at the midpoint) by the plane on which the spar of the supporting frame 11 distal from the driver's cab 14 lies, and it passes through the through opening of that spar.

In practice, the housing 115 extends (in the transverse direction) from the opening 116 (facing outward) to the rear wall 118, passing through the through opening realized in the spar (distal from the spar that defines the rear wall 118). This through opening does not interrupt the continuity of the housing 115 but, for example, connects an internal area of the (single) housing 115 located between the spars with an external area of the same housing located between the opening 116 and the through opening of the spar distal from the driver's cab 14.

Again, the hatch 117 is, for example, arranged at a sidewall of the crankcase 110, between a front wheel 12 and a rear wheel 12 (e.g. on the side opposite the driver's cab). Each hatch 117 further comprises locking means (such as a latch or other) configured to keep (releasably) the hatch in the closed configuration.

These closing means may be opened (manually and/or automatically) to release the hatch 117 to allow it to open.

The hatch 117 (such as the second hatch) may comprise at least one gas spring configured to push it open (once the closing means are released) and hold it in the open configuration.

The telehandler 10 further comprises a powertrain 30 for driving (in direct or indirect rotation) the front wheels 12 and/or the rear wheels 12 (i.e., the drive wheels 12 of the telehandler 10), i.e. designed (exclusively) for the traction function of the telehandler 10.

The powertrain 30 is (directly or, preferably, indirectly) supported by the supporting frame 11.

For example, the powertrain 30 is at least partially (preferably totally) within an engine compartment enclosed within the crankcase 110 (i.e. within a portion of the internal volume enclosed within the crankcase 110) and supported (indirectly) by the supporting frame 11 itself.

The engine compartment is defined by a portion of the (empty) volume inside the crankcase 110, preferably distinct (at least functionally) and/or separated (by separating partitions) from the above-mentioned housing 115.

The powertrain 30 is an electric or electrically driven powertrain.

In particular, the powertrain 30 comprises at least one electric motor 31.

The electric motor 31 is configured to drive the rotation (directly or indirectly) of the drive wheels 12 of the telehandler 10.

In the example, the electric motor 31 is (integrally) fixed/connected to the front axle 21 (and movable relative to the supporting frame 11), i.e. (with its own drive shaft) coaxial with the central axis thereof.

Preferably the electric motor 31 is arranged at the front (or in any case misaligned in plan) in relation to the housing 115.

The vertical longitudinal plane M is a median plane of the electric motor 31.

It is not excluded, however, that the electric motor 31 may be connected to the rear axle 21 or to a transfer/mechanical shifting, which is in turn connected to the front or rear axle via a cardan joint.

For example, the drive shaft 200 transfers the rotational motion of the wheels 12 connected to the front axle 21 (which takes motion from the engine 31) to the rear wheels 12 connected to the rear axle 22.

It is also not excluded that the powertrain 30 comprises a plurality of electric motors 31, e.g. one for each wheel (which thus becomes a wheel motor) or for each axle or other possible configurations.

The powertrain 30 further comprises a (hydraulic) pumping unit (not shown as it is of the known type) for driving the movement of the lifting arm 13.

The pumping unit comprises a hydraulic pump and, for example, a hydraulic distributor (connected to a hydraulic circuit).

The hydraulic pump - e.g. by means of the interposition of a suitable hydraulic distributor - is configured to control the movement and/or functionality of the lifting arm 13, i.e. the actuation of a hydraulic circuit of a drive unit (of the oscillation of the lifting arm 13) and/or hydraulic circuits of hydraulic actuators designed to actuate the extension of the lifting arm 13 (not shown as being of a known type) and/or the gripping/release and/or use of the working tools.

The pumping unit includes an electric motor to drive the hydraulic pump.

For example, the electric motor driving the hydraulic pump is an additional electric motor (different from the electric motor 31 used to propel the telehandler 10), e.g. dedicated (exclusively) to the movement of the lifting arm 13 via the hydraulic pump (and hydraulic distributor), which is for example arranged at the rear section of the telehandler 10.

It is not excluded, however, that a possible configuration may provide that the electric motor 31 (which is responsible for the traction of the telehandler 10) may be connected to the pumping unit to move the lifting arm 13, for example in this case a mechanical or hydraulic transmission (e.g. a hydrostatic transmission, a torque converter, clutches, etc.) is interposed between the electric motor 31 and the (front 21) axle such that the two traction/movement uses of the telescopic arm are mechanically separated.

The telehandler 10 further comprises a power supply system for the powertrain 30 placed on board the telehandler 10.

The supply system comprises an electric power source.

Preferably, the power supply system comprises (or consists of) at least one electric battery 40 (or an electric battery pack) configured to electrically supply at least the electric motor 31 (or the various electric motors 31 designed to drive the telehandler 10) of the powertrain 30 (to which it is connected, directly or indirectly, via a power line).

The electric battery 40 is designed to electrically power the powertrain 30 (and any electrical accessories, such as air conditioning, lights, instrument panel and others) of the telehandler 10.

In addition, the electric battery 40 is designed to electrically power the pumping unit 35, i.e. the electric motor driving the hydraulic pump designed to move the lifting arm 13. Again, the electric battery 40 may be designed to electrically supply (all of) any electric motors (and other electrical utilities) on the telehandler 10.

The characteristics/operating parameters (in terms of capacity/autonomy and/or voltage and/or inrush current or others) of the electric battery 40 define the minimum characteristics/operating parameters of the power supply system for power supplying the powertrain 30.

The electric battery 40 (e.g. lithium-ion or other) is rechargeable and/or removable and/or replaceable, as better described hereinafter.

The electric battery 40 (it is contained within an unopenable casing and) has an essentially parallelepiped shape.

For example, the electric battery 40 has a lower (essentially rectangular) base and an opposite (and homologous) top wall (parallel to the lower base).

Furthermore, the electric battery 40 has a plurality of perimeter faces, which are joined to the lower base and the top wall, of which at least one inner face (i.e., adapted to be facing the inside of the telehandler 10, when placed on board it) and one opposite outer face (i.e., adapted to be facing the outside of the telehandler 10, when placed on board it), as well as one front face (i.e., facing forward when placed on board the telehandler 10) and one opposite rear face.

Preferably, the electric battery 40 has an elongated shape along a longitudinal axis. The axial ends of the electric battery 40 are defined by the (lower) inner face and outer face thereof.

For example, the lower base, top wall and side faces of the electric battery 40 are made of metal (and are rigid/non-deformable to the usual stresses to which they are normally subjected in operation).

The electric battery 40, preferably but not exclusively, comprises at least one gripping and translation handle 41 arranged at one perimeter face thereof, e.g. the outer face. For example, the handle 41 projects axially beyond the outer face, e.g. at the edge joining the outer face with the top wall.

The electric battery 40 is (directly) supported by the (floor of the) supporting frame 11 and, preferably, is arranged (completely) within the housing 115 (enclosed by the crankcase 110 and closed by the hatch 117).

The electric battery 40 is arranged so as to be accessible from outside the crankcase 110 through the opening 116 thereof (when the hatch 117 is open and inaccessible when the hatch 117 is closed).

Preferably, but not exclusively, the electric battery 40 (in addition to being rechargeable either when arranged within the housing 115, for example through a charging socket located on the outer side of the crankcase 110, or outside it, for example in a suitable remote charging station) is configured to be removably housed in the housing 115, i.e., to be arranged in and/or extracted from the housing 115 by passing through the opening 116 described above.

The electric battery 40 is mountable/mounted within the housing 115 so as to cross (transversely) through it, namely by passing through the through opening of the spar (distal from the driver's cab 14).

In practice, when the electric battery 40 is housed (and positioned) in the housing 115 (in operational configurations), the electric battery 40 is arranged in such a way to occupy both the external and internal areas of the housing 115.

In other words, when the electric battery 40 is housed (and positioned) in the housing 115 (in operational configurations), the electric battery 40 crosses through the through opening and is ideally intersected (substantially at the midpoint) by the plane of the spar distal from the driver's cab 14, in practice, the electric battery 40 is inserted through the through opening of the spar, straddling it (resting on the floor of the supporting frame 11).

The electric battery 40 has an electrical connector (e.g. fixed externally to one of perimeter faces thereof, e.g. the outer face or a rear face proximal to the outer face) configured to connect mechanically and electrically (removably) to a conjugate electrical connector (e.g. placed at the end of a flexible electrical cable) present in the housing 115 (after the electric battery 40 is inserted into the housing 115, through the opening 116, and is arranged to reside therein).

The electrical connectors are configured for the passage of the power line (for the electrical supply of the electric motor 31) and, advantageously, also for the passage of a service or interface line used for the recognition and/or diagnostics of the electric battery 40.

The electrical connectors, for example, face near the outer face.

The electric battery 40 occupies a portion (lower than or substantially equal to the total) of the volume inside the housing 115.

Preferably, the electric battery 40 substantially fits in (at least in one direction) a dedicated (fixed) space of the housing 115.

In particular, the electric battery 40 occupies, in width (i.e. in the direction horizontal and orthogonal to the longitudinal axis of the supporting frame 11), substantially the entire depth of the housing 115.

The electric battery 40 may consist of one or more modules (e.g. two in number) joined together (inseparably), e.g. joined at two perimeter faces (e.g. the front face of one module is fixed adherent to the rear face of an adjoining module).

For example, the electric batteries 40, i.e. the various modules that make up the electric battery 40 are placed side by side in a side-by-side direction.

The electric battery 40, when inserted (to fully reside) in the housing 115, is arranged to be intersected by the vertical longitudinal plane M of the supporting frame 11.

Preferably, the electric battery 40, when inserted (to fully reside) in the housing 115, is arranged with its longitudinal axis orthogonal to said vertical longitudinal plane M (i.e. the outer face and the inner face of the main battery 40 lie in planes parallel to the vertical longitudinal plane M, i.e. a vertical median plane of the electric battery 40, normal with respect to its own prevailing longitudinal axis, is substantially parallel (and not coincident) to the vertical longitudinal plane M of the supporting frame 11.

For example, the aforementioned side-by-side direction is parallel to the longitudinal axis of the supporting frame 11.

Again, the rear face of the electric battery 40, when inserted (to fully reside) in the housing 115, is closer to (and parallel to) said vertical longitudinal plane M than the outer face is.

Furthermore, the lower base of the electric battery 40, which rests on the lower floor of the housing, when the electric battery 40 is inserted (to fully reside) into the housing 115, is arranged above (vertically aligned and/or at a higher elevation) the drive shaft 200.

Furthermore, the top wall of the electric battery 40, which rests on the lower floor of the housing when the electric battery 40 is inserted (to fully reside) in the housing 115, is arranged below (vertically aligned and/or at a higher elevation) the lifting actuator 130 when the lifting arm 13 is in the lowered position.

In particular, the top wall of the electric battery 40, which rests on the lower floor of the housing when the electric battery 40 is inserted (fully seated) in the housing 115, is arranged below (vertically aligned and/or at a higher elevation) the horizontal plane passing through the hinge axis C (of the lifting actuator 130).

Again, the electric battery 40, which rests on the lower floor of the housing, when the electric battery 40 is inserted (to fully reside) in the housing 115, is placed side by side and (vertically) misaligned in plan relative to the driver's cab 14.

In other words, the electric battery 40, which rests on the lower floor of the housing, when the electric battery 40 is inserted (to fully reside) in the housing 115, it rests (indirectly) with its inner face against the rear wall 118, which defines an axial end-stop abutment for the electric battery 40 within the housing 115 itself.

The electric battery 40 is configured to be arranged in and/or extracted from the housing 115 through the opening 116 by at least one translation along a (single) sliding direction orthogonal to the vertical longitudinal plane M of the supporting frame 11, with its inner face facing the rear wall 118.

For example, the overall height of the electric battery 40 is (slightly) lower than the height of the hatch 117 (i.e. the first hatch 117, so that it can be inserted in/extracted from the opening 116 when even only the first hatch 117 is open).

Preferably, each electric battery 40 is centred on the supporting frame 11, so that the centre of gravity of the masses composing the electric battery 40 substantially belongs to a vertical longitudinal plane of the supporting frame 11 containing the centre of gravity of the masses composing the telehandler 10 as a whole (without the electric batteries 40).

Between a wall of the housing 11 - in particular between the rear wall 118 of the housing 115 - and the electric battery 40 - in particular the inner face thereof -, when the electric battery is at least partially inserted inside the housing 115, a self-centring (by interference) and releasable conical coupling is defined.

The conical coupling comprises at least one male (cylindrical) element fixed to at least one of the electric battery 40 and the wall of the housing 115, in the example to the rear wall 118 of the housing 115, and a female element configured to couple to/uncouple from the male element, self-centring each other, during a translation of the electric battery along the allowed sliding direction (orthogonal to the vertical longitudinal plane M) of the electric battery 40 in the housing 15, wherein the female (conical) element is fixed to the other of the (rear 118) wall of the housing 115 and the electric battery 40, in the example to the electric battery 40.

The conical coupling has the function of self-centring the electric battery 40 in the housing 115, defining the axial abutment (along the sliding direction) of the electric battery 40 in the housing 115 (i.e. defining the direct support that interconnects the inner face of the electric battery 40 with the rear wall 118 of the housing 115) and, for example defining a releasable (by interference) locking element for the electric battery 40 within the housing 115, which prevents axial sliding thereof along the direction of the longitudinal axis of the supporting frame 11 and/or (slightly) counteracts the (accidental) extraction thereof along the sliding direction, while maintaining the electric battery 40 in its fully inserted (and residing) position in the housing 115.

The female element comprises, for example, a conical pin 42 fixed to the inner face of the electric battery 40 (provided with an axial cavity defining a conical inner surface diverging away from the inner face and a conical axis orthogonal to the outer face itself, i.e. parallel to the longitudinal axis of the electric battery itself).

The female element and/or the conical pin 42 is, for example, made of a material that is at least partially elastically yielding, so as to define a shock-absorbing body to dampen any side impacts.

The male element comprises an insertion body 1180, e.g. cylindrical (or conical), fixed to the rear wall 118 of the housing 115 (provided with an axis orthogonal to the rear wall itself, i.e. orthogonal to the vertical longitudinal plane M of the supporting frame 11) and configured to engage (by interference) the conical pin 42 (following axial translation). Preferably, the conical coupling comprises two (or more) male elements (equal to each other) and two respective female elements (equal to each other), e.g. placed side by side relative to the side-by-side direction and placed on opposite sides of the wall they are attached to), wherein each male element can be coupled to one (single) respective female element.

The electric battery 40 further comprises at least one sliding block 43 rigidly fixed (e.g. in a replaceable manner once it has worn out) to the lower base of the electric battery. The sliding block 40 is configured to (freely) slide on the lower floor of the housing 115 (which lower floor does not have or require sliding guides).

Preferably, the sliding block 43 is defined by a small longitudinal block (extending longitudinally throughout the electric battery 40) that extends parallel to the longitudinal axis of the electric battery 40.

For example, the electric battery 40 comprises a plurality of sliding blocks 43, preferably parallel to each other, at least one of which is placed near the front end (i.e., the edge interconnecting the lower base and the front face) of the lower base and one of which is placed near the rear end (i.e., the edge interconnecting the lower base and the rear face) of the electric battery 40.

It cannot be excluded that the electric battery 40 also comprises one or more further intermediate sliding blocks 43 parallel to the others, e.g. arranged substantially in the middle of the lower base of the electric battery 40.

Each sliding block 43 is made of a plastic material (with a low sliding friction coefficient), e.g. polyamide (e.g. PA6G) or polytetrafluoroethylene - PTFE (e.g. Teflon).

Again, a temporary locking element is defined between the electric battery 40 and the housing 115, which is configured to temporarily lock the electric battery 40 within the housing 115 (preventing the conical coupling from decoupling).

The temporary locking element comprises at least one latch 44 mounted on at least one of the electric battery 40 and a further wall of the housing 115.

In the example, the latch 44 is mounted on the electric battery 40, e.g. at/near the outer face thereof (preferably near the lower base, i.e. the edge joining the outer face with the lower base).

The temporary locking element comprises at least one latch seat 1150 configured to releasably couple with the latch 44 (which may be configured to releasably couple with the latch seat 1150), when the electric battery 40 is fully inserted into the housing 115 and the male element is coupled to the female element.

The latch seat 1150 is rigidly fixed to the other of the housing wall 115 and the electric battery 40.

In the example, the latch seat 1150 is fixed to the housing 115, e.g. at or near the lower floor thereof, near the opening 116.

For example, the latch seat 1150 and the latch 44 may be manually engaged (following a vertical mutual translation movement) for temporary locking the electric battery 40 in the housing 115, when the electric battery is fully inserted in the housing 115 with the conical coupling in the coupling configuration.

The temporary locking element is (manually) accessible from outside the housing 115 through the opening 116 (when the hatch 117 is opened).

The temporary locking element may comprise two (or more) latches 44 of which at least one is placed near the front end (i.e., the edge interconnecting the lower base, the front face and the outer face) of the outer face, and one placed near the rear end (i.e., the edge interconnecting the lower base, the rear face and the outer face) of the outer face of the electric battery 40.

The telehandler 10 can also include an auxiliary power supply system or auxiliary generator unit 50, as described for example in the Italian Patent Application No. 102023000014337 to the Applicant itself (which is incorporated herein by reference). The generator unit 50 is used as a charge and/or capacity and/or autonomy extender (so-called *range extender*) to perform at least one of the (two) operations selected from (i.e. selected from the group consisting of) the charging of the electric battery 40 and the electrical supply of the electric motor 31 (directly or indirectly, e.g. by means of a power line).

Preferably, the generator unit 50 is used as a charge and/or capacity and/or autonomy extender (so-called *range extender*) to perform (exclusively) charging of the electric battery 40.

The generator unit 50 is adapted to be supported by the supporting frame 11 and, preferably, is adapted to be arranged within the housing 115 (enclosed by the crankcase 110), preferably in a removable manner, for example through the second hatch 117 and/or supported above the electric battery 40.

The invention thus conceived is susceptible to several modifications and variations, all falling within the scope of the inventive concept.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A telehandler (10) comprising:
- a supporting frame (11) provided with a front section and a rear section aligned along a longitudinal axis of the supporting frame (11);
- a lifting arm (13) articulated to the rear section of the supporting frame (11) with the ability to rotate around at least one swinging axis;
- a front axle (21) provided with two front wheels (12) and connected to the front section of the supporting frame (11);
- a rear axle (22) provided with two rear wheels (12) and connected to the rear section of the supporting frame (11);
- a drive shaft (200) kinematically connecting the front axle (21) and the rear axle (22) for the transmission of motion between the front wheels (12) and the rear wheels (12);
- at least one electric motor (31) to drive in rotation the front wheels (12) and/or the rear wheels (12),
- at least one electric battery (40) for electrically supplying the at least one electric motor (31), wherein the at least one electric battery (40) is supported by a central section of the supporting frame (11) axially interposed between the front section and the rear section;
wherein each electric battery (40) is arranged so as to be intersected by a vertical longitudinal plane (M) of the supporting frame (11) parallel to the longitudinal axis thereof and equally distant from the wheels (12).

2. The telehandler (10) according to claim 1, wherein each electric battery (40) has a lower base arranged above the drive shaft (200).

3. The telehandler (10) according to claim 1, comprising a lifting actuator (130) for raising and lowering the lifting arm (13), between a lowered position, wherein the lifting arm has the longitudinal axis substantially horizontal, and a raised position, wherein the lifting arm has the longitudinal axis inclined with respect to the horizontal one, wherein each electric battery (40) has a top wall arranged below the lifting actuator (130) when the lifting arm (13) is in the lowered position.

4. The telehandler (10) according to claim 1 or 3, wherein the lifting actuator (130) is hinged to the supporting frame (11) with respect to a hinge axis (C) parallel to the swinging axis of the lifting arm (13), wherein each electric battery (40) has a top wall arranged below the horizontal plane passing through the hinge axis (C).

5. The telehandler (10) according to claim 1, wherein each electric battery (40) is placed side by side and misaligned in plan to a driver's cab (14) supported by the supporting frame (11).

6. The telehandler (10) according to claim 1 or 2, wherein each electric battery (410) has an elongated shape and is provided with a prevailing longitudinal axis, wherein each electric battery (40) is positioned with respect to the supporting frame (11) such that a vertical median plane thereof that is normal to its prevailing longitudinal axis is substantially parallel to the vertical longitudinal plane (M) of the supporting frame (11).

7. The telehandler (10) according to claim 1, comprising a housing (115) provided with an opening (116) closed by an openable hatch (117) made at a crankcase (110) fixed to the supporting frame, wherein the opening (116) is configured to make the housing (115) accessible from outside the casing (110), wherein the housing (115) is configured to house the at least one electric battery (40) and comprises a removable connector to which the at least one electric battery (40) is removably connectable, said at least one electric battery (40) being configured to be arranged in and/or extracted from the housing (115) through the opening (116).

8. The telehandler (10) according to the preceding claim, wherein each electric battery (40) is configured to be arranged in and/or extracted from the housing (115) through the opening (116) by means of at least one translation along a sliding direction that is orthogonal to the vertical longitudinal plane (M) of the supporting frame (11).

9. The telehandler (10) according to claim 7, wherein the housing (115) is made in the central section of the supporting frame (11) interposed between the front section and the rear section, preferably between the front wheels (12) and the rear wheels (12).

10. The telehandler (10) according to claim 7 or 9, wherein the housing (115) has a lower floor arranged above the drive shaft (200), preferably above the horizontal plane containing the central axes of the front axle (21) and the rear axle (22) interconnected by the drive shaft (200).

11. The telehandler (10) according to claim 7 or 10, wherein the lower floor of the housing (115) is defined as integral with a portion of the central section of the supporting frame (11).

12. The telehandler (10) according to claim 7, wherein the hatch (117) is arranged at a sidewall of the crankcase (110), between a front wheel (12) and a rear wheel (12).

13. The telehandler (10) according to claim 7, wherein a rear wall (118) of the housing (115), opposite to the hatch (117), defines an axial end-stop abutment for each electric battery (40) within the housing (115), wherein preferably the outer face of the rear wall (118) of the housing (115) delimits an inner side of a driver's cab (14) of the telehandler (10).

14. The telehandler (10) according to claim 1, comprising a plurality of modular electric batteries (40), preferably equal and joined to or separated from each other, with their own prevailing longitudinal axes parallel to each other, the electric batteries being placed side by side with respect to a side-by-side direction parallel to the longitudinal axis of the supporting frame (11).

15. The telehandler (10) according to the preceding claim in combination with claim 7, wherein the plurality of electric batteries is arranged within the same housing (115).

16. The telehandler according to claim 1, wherein each electric battery (40) is centred on the supporting frame (11) so that the centre of gravity of the masses composing the electric battery (40) substantially belongs to a vertical longitudinal plane of the supporting frame (11) containing the centre of gravity of the masses composing the telehandler (11) as a whole.
